# EUROPÄISCHE PATENTSCHRIFT

(11) **EP 1 537 937 B1**
(45) Veröffentlichungstag und Bekanntmachung des Hinweises auf die Patenterteilung: **17.08.2016**
(21) Anmeldenummer: 04027830.1
(22) Anmeldetag: 24.11.2004
(51) Int. Cl.: B23K 11/25, B23K 11/24, B23K 31/12

(54) **MODUL EINER WIDERSTANDSSCHWEISSZANGE**
MODUL OF A RESISTANCE WELDING GUN
MODULE D'UN PISTOLET DE SOUDAGE ÉLECTRIQUE PAR RÉSISTANCE

(30) Priorität: 05.12.2003 DE 10356978
(43) Veröffentlichungstag der Anmeldung: 08.06.2005
(73) Patentinhaber: Bosch Rexroth AG, 70184 Stuttgart (DE)
(72) Erfinder: Scholz, Reinhard, 64711 Erbach (DE); Müller, Heinz-Ullrich, 64720 Michelstadt (DE); Götz, Eckart, 64711 Erbach (DE)

(56) Entgegenhaltungen:
- EP-A- 0 830 916
- EP-A1- 1 729 310
- DE-A1- 4 325 858
- DE-A1- 10 203 246
- US-A- 4 734 555
- US-A- 5 077 458
- US-A- 5 166 491
- US-A- 5 683 598
- US-A1- 2002 125 219
- US-A1- 2003 089 684
- PATENT ABSTRACTS OF JAPAN Bd. 016, Nr. 212 (M-1250), 19. Mai 1992 (1992-05-19) & JP 04 037480 A (SUZUKI MOTOR CORP), 7. Februar 1992 (1992-02-07)

## Beschreibung

Die Erfindung entspringt aus dem Bereich der Widerstandsschweißtechnik zur Verwendung beim Rollnahtschweißen, Buckelschweißen, oder Punktschweißen und befasst sich mit der Unterbringung von Komponenten zum Betrieb innerhalb des Schweißzangengehäuses.

In der Offenlegungsschrift US 2002/0134763 ist eine Vorrichtung für die Realisierung verschiedener Schweißströme mittels eines Inverters mit vereinfachtem Aufbau gezeigt und die Schrift US 2001/0038000 offenbart ein Leistungsteil für eine Widerstandschweißanlage zur Bereitstellung der für den Schweißvorgang erforderlichen elektrischen Energie, insbesondere des Schweißstromes, mittels einer Inverterstromquelle.

In der JP 04037480 A schlägt der Erfinder zur Kostenreduzierung und zur kompakteren Ausgestaltung u.a. die Integration einer Leistungsregelung mit einem Schweißtransformator vor. Aufgrund der Abmessungen der Einrichtungen zur Leistungsregelung bei modernen Widerstandsschweißanlagen (vor allem bei Verwendung von AC-Technik) führt die vorgeschlagene Kombination dennoch zu einer relativ schweren und unhandlichen Anordnung, die aufgrund des Gewichtes und des Platzbedarfes kaum dafür geeignet sein dürfte, im Gehäuse einer Schweißzange durch einen Schweißroboter mitgeführt zu werden.

In der täglichen Praxis kommt es jedoch häufig vor, dass das System, bestehend aus Schweißzange + Transformator, beweglich an einem Roboterarm (Schweißroboter) montiert wird. Das Gewicht dieser Anordnung kann schnell 150 kg und mehr betragen, wobei der Trafo einen wesentlichen Anteil am Gewicht ausmacht. Daher ist das Gewicht der Gesamtanordnung ein entscheidender Faktor für die Dimensionierung der Mechanik und die Bewegungsregelung des Schweißroboters (Gelenke, Tragkraft, Beschleunigung, etc.) und natürlich auch für die aufzuwendenen Kosten. Je geringer das Gewicht ist, desto geringer sind auch die Anforderungen an die Robotermechanik.

Die Ansteuerung des beweglichen Systems wird oftmals örtlich fest in Verbindung mit einer zentralen Robotersteuerung realisiert.

US 2002/0125219 A1 zeigt eine modulare servopneumatische Schweißzange die ein Schweißzangengehäuse gemäß dem Oberbegriff von Patentanspruch 1 aufweist.

US5166491A bezieht sich auf eine von einem Mastercomputer gesteuerte modulare Schweißvorrichtung, eine Schweißsteuerung und eine Leistungseinheitvorrichtung und -verfahren. Hier ist ein Schweißtransformator außerhalb eines Schweißzangengehäuses angeordnet.

US 4,734,555 A offenbart ein Verfahren und eine Vorrichtung zum Messen und Steuern einer Vertiefung beim Widerstandsschweißen.

EP 0 830 916 A1 zeigt eine motorbetriebene Widerstandspunktschweißmaschine.

Die Aufgabe der vorliegenden Erfindung ist es, unter Berücksichtigung der Anforderungen an das Gewicht eine möglichst effektive Raumausnutzung des vom Schweißroboter geführten Schweißzangengehäuses zu erreichen, um zum einen Raumbedarf im Schweißkoffer bzw. Schaltschrank zu gewinnen und zum anderen ein möglichst flexibles und modular aufgebautes System zu erhalten, welches keine allzu hohen mechanischen Anforderungen an den Schweißroboter stellt, also die Anforderungen an das zulässige Maximalgewicht erfüllt.

Diese Aufgabe wird durch ein Schweißzangengehäuse gemäß Patentanspruch 1 gelöst.

Vorteilhafte weitere Ausgestaltungen des Schweißzangengehäuses sind in den abhängigen Patentansprüchen dargelegt.

Der Platzbedarf, der nur ca. 30 % eines für AC-Technik konzipierten Trafos beträgt, und ganz besonders auch das Gewicht für den bisher von der Anmelderin verwendeten MF-Schweißtransformator konnte durch den Einsatz eines kleineren, fortschrittlichen MF-Schweißtransformatoren gleicher Leistung annähernd halbiert werden. Neben der hierdurch erreichten Gewichtsersparnis wurde zusätzlich Platz im Schweißzangengehäuse gewonnen. Dieser gewonnene Raum wird nun erfindungsgemäß durch ein Modul mit einem gekühlten Schweißtransformator und mit Gleichrichter als in das Modul integrierte Modulkomponente sowie mit einer Schnittstelle zur Bereitstellung bzw. Aufnahme der für den Betrieb von Schweißzangen einer mit einer Schweißsteuerung ausgestatteten Widerstandsschweißanlage erforderlichen elektrischen Eingangs- bzw. Ausgangsgrößen eingenommen, wobei die Widerstandsschweißanlage vorzugsweise über Ultraschallmessungen den Schweißprozess überwacht und insbesondere zur Herstellung von Schweißpunkten bzw. Schweißnähten an Blechen im Karosseriebau dient, wobei das Modul so ausgebildet ist, dass es weitere Modulkomponenten, die zur Durchführung des von der Schweißsteuerung überwachten Schweißprozesses relevant sind, umfasst und die Eingangs- bzw. Ausgangsgrößen der Modulkomponenten über die Schnittstelle mit Schweißzangenkomponenten ausgetauscht werden, insbesondere mit elektrischen Antrieben sowie Ultraschallsendern und -empfängern, und das Schweißzangengehäuse das Modul umfasst. Dies schafft einerseits zusätzlichen Stauraum im Schaltschrank bzw. Schweißkoffer und andererseits erfüllt diese Lösung die Anforderungen an die gewünschte Modularität wegen der vorhandenen einheitlichen Schnittstelle.

Die Modulkomponenten könnten beispielsweise als Steckkarten realisiert werden, so dass ähnlich wie bei einem Industrie PC je nach Systemkonfiguration entsprechende Funktionalitäten nachgerüstet oder ausgetauscht werden können.

Würde man ein Modul vorteilhafterweise so ausbilden, dass es zur Zusammenführung und Weiterleitung von Schweißzangensignalen und Signalen der Trafosensorik dient, so könnte dieses Modul als Input/Ouptut-Einheit die Schnittstelle zu einer extern angeschlossenen Steuerung bzw. Leistungsregelung darstellen und über genormte Schnittstellen mit der Außenwelt kommunizieren, während es die Signale innerhalb des Schweißzangengehäuses an die entsprechenden Komponenten weiterleitet.

Ganz besonders vorteilhaft wäre es, wenn eine relevante Modulkomponente eine zumindest teilweise integrierte Vorrichtung zur' Durchführung von Ultraschallmessungen zu Zwecken der Prüfung von Schweißverbindungen und/oder zur Regelung des Schweißvorganges ist. Über einen Ultraschallsender und Ultraschallempfänger werden hierzu Transversalwellen durch den flüssigen Schweißpunkt während des Schweißvorganges geleitet. Da Flüssigkeiten im Gegensatz zu festen Materialien keine Querkräfte übertragen können, verändert sich das empfangene Signal mit abnehmender Festigkeit des schmelzenden Materials. Es werden abhängig von den sich verändernden Eigenschaften des Schweißpunktes sogenannte Transmissionskurven aufgezeichnet, aus der die momentanen Eigenschaften des Schweißpunktes abgelesen werden kann. Das heißt es ist ein Rückschluss möglich, ob die Schmelze beispielsweise zu heiß, zu kalt oder optimal temperiert ist. Diese Transmissionskurve wird während des Schweißvorganges ausgewertet von einem Ultraschallregler. Aus der Kurve lässt sich auch der momentane Schweißpunktdurchmesser berechnen und über eine Software werden die Daten statistisch auswertbar, so dass im Prinzip jeder einzelne Schweißpunkt protokolliert werden kann. Die oben genannte Lösung gestattet es, den Ultraschallregler aus dem Schaltschrank herauszunehmen und direkt innerhalb des Schweißzangengehäuses anzubringen, also direkt in der Nähe der Ultraschallsensoren. Die komplette Erzeugung und/oder Verarbeitung der Ultraschallmessdaten wäre somit vor Ort und ohne lange Kabelverbindungen realisierbar. Über eine genormte Schnittstelle könnten dann die Messergebnisse direkt von einer Steuerung abgefragt werden. Potentielle Fehlerquellen durch Kabelbruch oder Übertragungsfehler könnten minimiert werden.

Wird das Modul so ausgestaltet, dass eine oder gar die einzige Modulkomponente im Modul ein zumindest teilweise oder auch vollständig integrierter Umrichter (oder nur das Leistungsteil) mit oder ohne Gleichrichter zur primärseitigen Versorgung eines MF-Transformators ist, dann wäre neben der reinen MF-Trafofunktion auch dessen Energiequelle innerhalb des Moduls und damit des Schweißzangengehäuses untergebracht. Somit würde die Kombination aus einem wassergekühlten MF-Transformator mit/ohne Gleichrichter zusammen mit dem Umrichter eine kompakte, selbständige Einheit bilden, die ggf. auch in anderen Anwendungen Verwendung finden würde oder auch auf andere Technologien übertragbar wäre.

Ein weiterer Vorteil ergäbe sich durch die zumindest teilweise Unterbringung von Vorrichtungen zur Regelung des Schweißstromes im Modul, so dass der erforderliche Platzbedarf im Schaltschrank bzw. Schweißkoffer, der in der Regel auf oder an der Robotersteuerung platziert ist, reduziert werden oder komplett entfallen kann.

Auch könnte vorteilhaft eine Komponente zur Auswertung der Sensoren von Schweißzangenmotoren und/oder deren Ansteuerung zur Kraft- und Lageregelung in das Modul integriert werden, dies würde einen weiteren Beitrag zur Modularität der Gesamtanordnung beitragen und alle zur Nutzung der Schweißzangen erforderlichen Komponenten an einem zentralen Montageort ohne lange Wege vereinen. In der Regel sind in Schweißzangen zwei Achsen beispielsweise durch elektrische Motoren anzusteuern. Die o.g. Ansteuerung könnte also zwei Antriebsregler beinhalten, d.h. für jede Achse einen. Eine Achse übernimmt dabei den Zangenausgleich, die zweite Achse führt die Elektroden während des Schweißvorganges und betätigt den Druckzylinder zur Realisierung des Arbeitshubes oder des Vorhubes im Wartungsfalle. Als Verbindungsglied zwischen Motorabtrieb und Zange dienen im Falle von rotationssymmetrischen Motoren Kugelumlaufspindeln. Bei Verwendung von Linearmotoren wäre auch ein direkter Antrieb machbar.

Maximale Modularität und Platzeinsparung wäre dann gewährleistet, wenn eine Komponente im Modul eine zumindest teilweise integrierte Schweißsteuerung ist, um zum Beispiel eine dezentral organisierte Steuerungsarchitektur zu unterstützten. Betriebsparameter wie Vorhaltezeit, Stromzeit, Nächhaltezeit und Offenhaltezeit könnten dann u.a. durch diese Steuerung vorgegeben werden.

Selbstverständlich können beliebige Kombinationen der zuvor erwähnten Modulkomponenten je nach Bedarf und Anwendungsfall so kombiniert werden, dass sich eine optimale Ausnutzung des vorhandenen Staubraumes im Schweißzangengehäuse ergibt. Besonders nützlich ist die Anordnung immer dann, wenn zusammen agierende Vorrichtungen, wie z.B. die Ultraschallsensoren und der Ultraschallregler oder die Schweißzangen und der Schweißstromregler oder wie schon erwähnt auch die Steuerung, direkt im Modul angeordnet sind. Inwieweit eine vollständige Integration aller zur Durchführung des Schweißprozesses relevanten Komponenten möglich ist, wird in erster Linie von der verwendeten Halbleitertechnologie und den erforderlichen Schweißströmen bestimmt. Theoretisch wäre eine Vollintegration schon jetzt denkbar

Es werden zur Lösung kundenspezifischer Anforderungen für unterschiedliche Zangenfunktiönen zum Beispiel folgende Varianten vom Anmelder favorisiert:
1. Für die Trafogrundfunktion kann mittel eines Multikontaktsteckers oder einer PG-Verschraubung der Leistungsanschluss hergestellt werden. Die Trafosensorik wird über eine Klemme bzw. einen kundenspezifischen Anschluss weitergeleitet und es besteht die Möglichkeit verschieden Zangensignale im Modul zusammenzuführen und über eine gemeinsame Schnittstelle (z.B. über den Roboter) zur übergeordneten Steuerung zu führen.
2. Zusätzlich zu 1. bildet die Funktion Ultraschallmessung mit der Ansteuerung der Ultraschall-Sensorik bzw. Ultraschall-Elektronik und die Verwendung eines Feldbusses (evtl. CAN) zum Umrichter eine oder mehrere Modulkomponenten des Moduls.
3. Zusätzlich zu 1. wird die Funktion "Servozange" (Regelung der Motorleistung, Verarbeitung der Sensorik von Druck und Ausgleichsmotor, Codierung) in das Modul integriert.
4. Zusätzlich zu 3. wird die in 2. erwähnte Ultraschallmessung als Modulkomponente in das Modul integriert.

Die Modulkomponenten werden vorteilhafterweise lösbar, beispielsweise über Steckverbindungen, mit der Schnittstelle des Moduls elektrisch verbunden, so sind sie jederzeit austauschbar, z.B. im Reparaturfalle, und können schnell und leicht entfernt bzw. eingebracht werden.

Wegen der häufig sehr widrigen Umstände im Umfeld der Anordnung wird das Gehäuse des Moduls undurchlässig für Staub, Strahl-, Spritz- oder Sprühwasser (IP65 oder IP66 oder höher) ausgebildet, um die interne Elektronik optimal vor Umwelteinflüssen zu schützen.

Da abhängig von der Art der Modulkomponenten auch eine Kühlung erforderlich werden kann, z.B. speziell, wenn es sich um Leistungskomponenten handelt, wird die Transformator- bzw. Gleichrichterkühlung erweitert, so dass sie die von den Modulkomponenten entstehende Wärme gleich mit abführt. Wegen der gesteigerten Wärmeabfuhr wird es dann allerdings ggf. erforderlich den Kühlmitteldurchsatz zu erhöhen oder das Kühlmittel selbst durch ein Kühlmittel,mit höherer Wärmeaufnahme zu ersetzen.

Es bietet sich außerdem an die Energieversorgung des Moduls ebenfalls in das Modulgehäuse zu integrieren und über die Netzspannung eine Gleichspannung zu realisieren oder einen extern oder auch intern erzeugten Leistungstakt heranzuziehen. Dies würde einen weiteren Beitrag zur Integration des Gesamtsystems leisten.

Der Vorteil der Erfindung kommt ganz besonders zum Tragen, wenn sie eingesetzt wird in einer Fertigungsstraße zur Realisierung eines industriellen Prozesses, insbesondere für den Karosseriebau, mit Schweißrobotern an denen Schweißzangen gelenkig angebracht sind, wobei die Schweißzangen betrieben sind über ein Modul mit einem gekühlten Schweißtransformator mit Gleichrichter als in das Modul integrierte Modulkomponente sowie mit einer Schnittstelle zur Bereitstellung bzw. Aufnahme der für den Betrieb von Schweißzangen einer mit einer Schweißsteuerung ausgestatteten Widerstandsschweißanlage erforderlichen elektrischen Eingangs- bzw. Ausgangsgrößen, wobei die Widerstandsschweißanlage vorzugsweise über Ultraschallmessungen den Schweißprozess überwacht und insbesondere zur Herstellung von Schweißpunkten bzw. Schweißnähten an Blechen im Karosseriebau dient, wobei das Modul so ausgebildet ist, dass es weitere Modulkomponenten, die zur Durchführung des von der Schweißsteuerung überwachten Schweißprozesses relevant sind, umfasst und die Eingangs- bzw. Ausgangsgrößen der Modulkomponenten über die Schnittstelle mit Schweißzangenkomponenten ausgetauscht werden, insbesondere mit elektrischen Antrieben sowie Ultraschallsendern und -empfängern, und das Schweißzangengehäuse das Modul umfasst und beim Schweißen mitgeführt ist.

Eine dezentrale Organisation und die möglichst hohe Auslagerung von Systemkomponenten unter Ausnutzung aller Platzreserven ist bei Fertigungsstraßen von enormer Bedeutung. Die Erfindung hilft die Aufwände bzgl. der Verkabelung und Ansteuerung der für den Schweißvorgang relevanten Komponenten drastisch zu reduzieren und damit auch Kosten einzusparen. Dieser Vorteil wird dadurch noch gesteigert, dass das Modul nach einem der Ansprüche 2 bis 11 ausgebildet ist und/oder alle an den Schweißzangen angebrachten Module an eine zentrale Schweißsteuerung und/oder zentrale Energieversorgung angebunden sind.

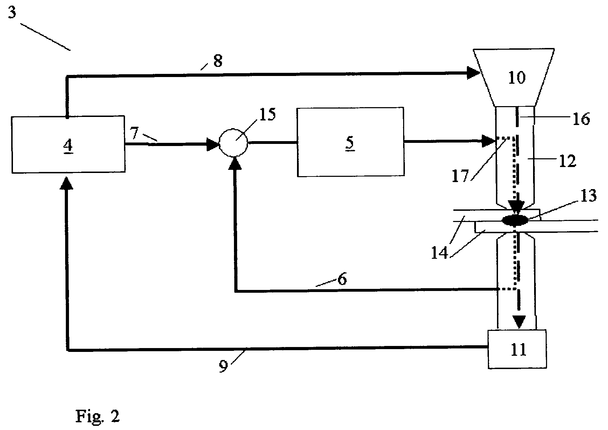

Nachfolgend wird anhand von Zeichnung 1 die Grundidee der Erfindung nochmals erläutert und anhand der Figur 2 ein mögliches Anwendungsbeispiel grob schematisch gezeigt. Gleiche Bezugszeichen in unterschiedlichen oder gleichen Figuren bezeichnen identische Komponenten.

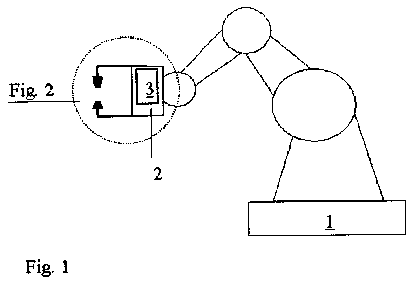

Figur 1 zeigt einen Schweißroboter 1 mit Schweißzangengehäuse 2 und Modul 3. Das Modul 3 ist im Schweißzangengehäuse 2 untergebracht, welches am schwenkbaren Arm des Roboters gelenkig gelagert ist und alle Bewegung des Armes mitmacht.

Das Schweißzangengehäuse 2 ist in allen Ebenen schwenkbar, so dass auch entlegene Winkel, beispielsweise innerhalb einer Automobilkarosserie mittels der Schweißelektroden 12 erreicht werden können. Die elektrische Versorgung wird durch das Modul 3 gewährleistet, wobei das Modul 3 selbst wiederum über den Arm den Schweißroboters, welcher die nötigen Versorgungsleitungen bereit hält, mit der Außenwelt kommuniziert. Nicht gezeigt sind hier weitere Komponenten, die im Schweißzangengehäuse 2 untergebracht sind. Es gehören hierzu unter anderem: elektrische Antriebe, Kugelumlaufspindeln, wassergekühlter Transformator mit Gleichrichterdioden, usw..

Figur 2 zeigt etwas detaillierter welche Funktion zum Beispiel mittels des Moduls 3 im Schweißzangengehäuse 2 realisierbar wäre. Es sind dargestellt eine Modulkomponente des Moduls 3, der Ultraschallregler 4, der Stromregler 5, ein der Subtraktionsschaltung 15 zugeführter Ist-Strom 6 und Soll-Strom 7, das Ultraschall-Sendesignal 8 und das Ultraschall-Empfangssignal 9 mit dem Ultraschall-Sender 10 bzw. -Empfänger 11 sowie die Schweißelektroden 12 und ein beispielhafter Schweißpunkt 13 zur Verbindung der Materialien 14. Weiter sind der Schweißstrom 17 und die Transversalwellen 16 angedeutet.

Das Modul 3 umfasst hier als eine mögliche Modulkomponente die zuvor bereits erwähnte Vorrichtung zur Durchführung von Ultraschallmessungen zur Prüfung von Schweißverbindungen während des Schweißvorganges. Der Ultraschallregler 4 beaufschlagt den Ultraschallsender 10 mit horizontal polarisierten Transversalwellen bzw. Scherwellen 16. Da flüssige Materialien jedoch keinen Scherwiderstand aufweisen, können sich Scherwellen 16 in ihnen auch nicht ausbreiten. Die Scherwellen wandern also durch die meist aus Kupfer hergestellten Schweißzangen in die Schweißelektroden und dann in den flüssigen Schweißpunkt. Mit zunehmender Verflüssigung der Schweißzone ändern sich damit die charakteristischen Eigenschaften der zum Ultraschallempfänger 11 über die Elektroden 12 und die Schweißzangen geleiteten Scherwellen. Dieses Ultraschall-Empfangssignal 9 wird von dem Ultraschallregler 4 wieder empfangen und intern verarbeitet. Den aus dieser Bearbeitung resultierenden Stromsollwert 7 und den gemessenen Stromistwert 6 erhält der Stromregler 5 über den Subtraktionspunkt 15. Damit steht ein Korrektursignal zur Verfügung, mit dem der Schweißstrom 17 so eingestellt wird, dass er einen den Anforderungen gemäßen Schweißpunkt bzw. eine den Anforderungen gemäße Temperatur im Schweißpunkt erzeugt. Weitere Parameter zur Beeinflussung der Schweißverbindung wären der Anpressdruck der Schweißelektroden oder auch die Dauer des Schweißvorganges. Regeleinrichtungen die auch diese Größen beeinflussen, könnten zusätzlich noch integriert werden. Bei Verwendung in einer Fertigungsstraße ist der erfindungsgemäße Vorteil schnell ersichtlich, da die Ultraschallregelung nun dezentral organisiert ist und die Maßnahmen zur Optimierung der Schweißverbindung unmittelbar am Entstehungsort des Schweißpunktes durchgeführt werden können.

### Bezugszeichenliste

- 1: Schweißroboter
- 2: Schweißzangengehäuse
- 3: Modul
- 4: Ultraschallregler
- 5: Stromregler
- 6: Ist-Strom
- 7: Soll-Strom
- 8: Ultraschall-Sendesignal
- 9: Ultraschall-Empfangssignal
- 10: Ultraschall-Sender
- 11: Ultraschallempfänger
- 12: Schweißelektroden
- 13: Schweißpunkt
- 14: Material
- 15: Subtraktionspunkt
- 16: Scherwellen
- 17: Schweißstrom

## Patentansprüche

1. Schweißzangengehäuse (2) für eine mit einer Schweißsteuerung ausgestattete Widerstandsschweißanlage, welche zur Herstellung von Schweißpunkten (13) bzw. Schweißnähten an Blechen im Karosseriebau ausgestaltet ist, wobei das Schweißzangengehäuse ein Modul (3) umfasst,
**dadurch gekennzeichnet, dass**
das Modul (3) umfasst
einen durch eine Kühlung kühlbaren MF-Schweißtransformator mit Gleichrichter, wobei der MF-Schweißtransformator derart klein bauend ausgestaltet ist, dass er eine in das Modul (3) integrierte Modulkomponente ist,
mindestens eine weitere in das Modul integrierte Modulkomponente zur Bereitstellung und/oder Aufnahme von elektrischen Signalen, die zur Durchführung des von der Schweißsteuerung überwachten Schweißprozesses relevant sind, und
eine Schnittstelle zur Bereitstellung und/oder Aufnahme der für den Betrieb von Schweißzangen erforderlichen elektrischen Eingangs- und/oder Ausgangsgrößen, wobei die elektrischen Eingangs- und/oder Ausgangsgrößen elektrische Signale, die zwischen der mindestens einen weiteren Modulkomponente und der Schweißsteuerung auszutauschen sind, und Größen für den Leistungsanschluss des MF-Schweißtransformators umfassen.

2. Schweißzangengehäuse gemäß Anspruch 1, **dadurch gekennzeichnet, dass** die Schnittstelle als eine Modulkomponente ausgestaltet ist zur Zusammenführung und Weiterleitung von Schweißzangensignalen und Signalen der Trafosensorik.

3. Schweißzangengehäuse gemäß einem der vorherigen Ansprüche, **dadurch gekennzeichnet, dass** eine relevante Modulkomponente eine zumindest teilweise integrierte Vorrichtung zur Durchführung von Ultraschallmessungen zur Prüfung von Schweißverbindungen während des Schweißvorganges ist.

4. Schweißzangengehäuse gemäß einem der vorherigen Ansprüche, **dadurch gekennzeichnet, dass** eine Modulkomponente ein zumindest teilweise integrierter Umrichter zur primärseitigen Versorgung des Transformators ist, wobei der Umrichter mit oder ohne Gleichrichter und der MF-Schweißtransformator mit oder ohne Gleichrichter ausgestaltet ist.

5. Schweißzangengehäuse gemäß einem der vorherigen Ansprüche, **dadurch gekennzeichnet, dass** eine Modulkomponente eine zumindest teilweise integrierte Vorrichtung zur Bereitstellung und Regelung des Schweißstromes (17) ist.

6. Schweißzangengehäuse gemäß einem der vorherigen Ansprüche, **dadurch gekennzeichnet, dass** eine Modulkomponente zur Auswertung der Sensoren von Schweißzangenmotoren und/oder deren Ansteuerung dient.

7. Schweißgehäuse gemäß einem der vorherigen Ansprüche, **dadurch gekennzeichnet, dass** eine Modulkomponente eine zumindest teilweise integrierte Schweißsteuerung ist.

8. Schweißzangengehäuse gemäß einem der vorherigen Ansprüche, **dadurch gekennzeichnet, dass** die Modulkomponenten lösbar, beispielsweise über Steckverbindungen, mit der Schnittstelle des Moduls (3) elektrisch verbunden sind.

9. Schweißzangengehäuse gemäß einem der vorherigen Ansprüche, **dadurch gekennzeichnet, dass** das Gehäuse des Moduls (3) undurchlässig für Staub, Strahl-, Spritz- oder Sprühwasser, insbesondere gemäß IP65 oder IP66 oder höher, ausgebildet ist.

10. Schweißzangengehäuse gemäß einem der vorherigen Ansprüche, **dadurch gekennzeichnet, dass** der MF-Schweißtransformator derart kühlbar ist, dass die von den Modulkomponenten entstehende Wärme über die Kühlung abgeführt ist.

11. Schweißzangengehäuse gemäß einem der vorherigen Ansprüche, **dadurch gekennzeichnet, dass** die Energieversorgung des Moduls (3) ebenfalls in das Modulgehäuse integriert ist und über die Netzspannung eine Gleichspannung oder ein Leistungstakt realisiert ist.

12. Schweißzangengehäuse gemäß einem der vorherigen Ansprüche, **dadurch gekennzeichnet, dass** die Modulkomponenten als Steckkarten realisiert sind.

13. Fertigungsstraße zur Realisierung eines industriellen Prozesses, insbesondere für den Karosseriebau, mit Schweißrobotern an denen Schweißzangen gelenkig angebracht sind, wobei das Schweißzangengehäuse nach einem der vorhergehenden Ansprüche ausgebildet ist.

14. Fertigungsstraße nach Anspruch 13, wobei alle an den Schweißzangen angebrachten Module (3) an eine zentrale Schweißsteuerung und/oder zentrale Energieversorgung angebunden sind.

## Claims

1. Welding gun housing (2) for a resistance welding system that is provided with a welding controller and is designed for producing weld spots (13) or weld seams on sheet-metal parts in automotive body construction, the welding gun housing comprising a module (3),
**characterized in that**
the module (3) comprises
an MF welding transformer, which can be cooled by a cooling means and has a rectifier, the MF welding transformer being designed to be of such a small size that it is a module component integrated in the module (3),
at least one further module component integrated in the module, for providing and/or receiving electrical signals that are relevant for carrying out the welding process monitored by the welding controller, and
an interface, for providing and/or receiving the electrical input and/or output variables required for operation of the welding gun, the electrical input and/or output variables comprising electrical signals that are to be exchanged between the at least one further module component and the welding controller and variables for the power connection of the MF welding transformer.

2. Welding gun housing according to Claim 1, **characterized in that** the interface is designed as a module component for bringing together and passing on welding gun signals and signals of the transformer sensor system.

3. Welding gun housing according to one of the preceding claims, **characterized in that** a relevant module component is an at least partially integrated device for carrying out ultrasonic measurements for testing welded connections during the welding operation.

4. Welding gun housing according to one of the preceding claims, **characterized in that** a module component is an at least partially integrated converter for supplying the transformer on the primary side, the converter being designed with or without a rectifier and the MF welding transformer being designed with or without a rectifier.

5. Welding gun housing according to one of the preceding claims, **characterized in that** a module component is an at least partially integrated device for providing and controlling the welding current (17).

6. Welding gun housing according to one of the preceding claims, **characterized in that** a module component serves for the evaluation of the sensors of welding gun motors and/or their activation.

7. Welding housing according to one of the preceding claims, **characterized in that** a module component is an at least partially integrated welding controller.

8. Welding gun housing according to one of the preceding claims, **characterized in that** the module components are electrically connected to the interface of the module (3) in a releasable manner, for example by way of plug-in connections.

9. Welding gun housing according to one of the preceding claims, **characterized in that** the housing of the module (3) is formed so as to be impermeable to dust, jetted, splashed or sprayed water, in particular in compliance with IP65 or IP66 or higher.

10. Welding gun housing according to one of the preceding claims, **characterized in that** the MF welding transformer can be cooled in such a way that the heat produced by the module components is dissipated by way of the cooling means.

11. Welding gun housing according to one of the preceding claims, **characterized in that** the supplying of energy to the module (3) is likewise integrated in the module housing and a DC voltage or a power cycle is realized by way of the system voltage.

12. Welding gun housing according to one of the preceding claims, **characterized in that** the module components are realized as plug-in cards.

13. Production line for realizing an industrial process, in particular for automotive body construction, with welding robots to which welding guns are attached in an articulated manner, the welding gun housing being formed according to one of the preceding claims.

14. Production line according to Claim 13, all of the modules (3) that are attached to the welding gun being connected to a central welding controller and/or a central energy supply.

## Revendications

1. Boîtier de pistolet à souder (2) destiné à une installation de soudage à résistance équipée d'une unité de commande de soudage, laquelle installation est conçue pour réaliser des points de soudure (13) ou des de cordons de soudure sur des tôles dans la construction de carrosseries, dans lequel le boîtier de pistolet à souder comprend un module (3),
**caractérisé en ce que** le module (3) comprend un transformateur de soudage MF pouvant être refroidi par un système de refroidissement, muni d'un redresseur, dans lequel le transformateur de soudage MF est réalisé de manière à présenter une structure de petite taille afin qu'il soit sous la forme d'un composant de module intégré au module (3),
au moins un autre composant de module intégré au module pour fournir et/ou acquérir des signaux électriques qui sont utiles à la mise en oeuvre du processus de soudage surveillé par l'unité de commande de soudage, et
une interface destinée à fournir et/ou à acquérir des grandeurs d'entrée et/ou de sortie électriques nécessaires au fonctionnement du pistolet à souder, dans lequel les grandeurs d'entrée et/ou de sortie électriques comprennent des signaux électriques qui sont échangés entre l'au moins un autre composant de module et l'unité de commande de soudage et des grandeurs liées au raccordement de puissance du transformateur de soudage MF.

2. Boîtier de pistolet à souder selon la revendication 1, **caractérisé en ce que** l'interface est réalisée sous la forme d'un composant de module de manière à regrouper et à réacheminer des signaux de soudage et des signaux du système de capteur de transformateur.

3. Boîtier de pistolet à souder selon l'une quelconque des revendications précédentes, **caractérisé en ce qu'**un composant de module concerné est un dispositif au moins partiellement intégré destiné à effectuer des mesures par ultrasons afin de tester des joints soudés pendant le processus de soudage.

4. Boîtier de pistolet à souder selon l'une quelconque des revendications précédentes, **caractérisé en ce qu'**un composant de module est un convertisseur au moins partiellement intégré pour l'alimentation du côté primaire du transformateur, dans lequel le convertisseur est réalisé avec ou sans redresseur et le transformateur de soudage MF est réalisé avec ou sans redresseur.

5. Boîtier de pistolet à souder selon l'une quelconque des revendications précédentes, **caractérisé en ce qu'**un composant de module est un dispositif au moins partiellement intégré destiné à fournir et à réguler le courant de soudage (17).

6. Boîtier de pistolet à souder selon l'une quelconque des revendications précédentes, **caractérisé en ce qu'**un module de composant est utilisé pour évaluer les capteurs de moteurs de pistolets à souder et/ou leur système de commande.

7. Boîtier à souder selon l'une quelconque des revendications précédentes, **caractérisé en ce qu'**un composant de module est une unité de commande de soudage au moins partiellement intégrée.

8. Boîtier de pistolet à souder selon l'une quelconque des revendications précédentes, **caractérisé en ce que** les composants de module sont électriquement connectés de manière amovible, par exemple par l'intermédiaire de connecteurs, à l'interface du module (3).

9. Boîtier de pistolet à souder selon l'une quelconque des revendications précédentes, **caractérisé en ce que** le boîtier du module (3) est réalisé de manière étanche aux poussières, aux projections d'eau, aux éclaboussures ou à de l'eau pulvérisée, notamment conformément aux normes IP65 ou IP66 ou supérieurs.

10. Boîtier de pistolet à souder selon l'une quelconque des revendications précédentes, **caractérisé en ce que** le transformateur de soudage MF peut être refroidi de telle manière que la chaleur dégagée par les composants de module puisse être évacuée par l'intermédiaire du système de refroidissement.

11. Boîtier de pistolet à souder selon l'une quelconque des revendications précédentes, **caractérisé en ce que** l'alimentation en énergie du module (3) est également intégrée au boîtier de module et est réalisée au moyen de la tension du secteur, d'une tension continue ou d'une alimentation d'horloge.

12. Boîtier de pistolet à souder selon l'une quelconque des revendications précédentes, **caractérisé en ce que** les composants de module sont réalisés sous la forme de cartes enfichables.

13. Ligne de fabrication destinée à réaliser un processus industriel, notamment pour la construction de carrosseries, comportant des robots de soudage sur lesquels sont montés de manière articulée des pistolets à souder, dans lequel le boîtier de pistolet à souder est réalisé selon l'une quelconque des revendications précédentes.

14. Ligne de fabrication selon la revendication 13, dans laquelle tous les modules (3) montés sur les pistolets à souder sont reliés à une unité de commande de soudage centrale et/ou à une alimentation en énergie centrale.
